# EUROPEAN PATENT SPECIFICATION

(11) **EP 3 003 825 B1**
(45) Date of publication and mention of the grant of the patent: **09.01.2019**
(21) Application number: 14730824.1
(22) Date of filing: 06.06.2014
(51) Int. Cl.: B62D 7/18, B60B 5/02, B60B 27/00

(54) **LIGHTWEIGHT STEERING KNUCKLE**
LEICHTE RADTRÄGER
SUPPORT DE ROUE LEGER

(30) Priority: 07.06.2013 WO PCT/EP2013/061790
(43) Date of publication of application: 13.04.2016
(73) Proprietor: Aktiebolaget SKF, 415 50 Göteborg (SE)
(72) Inventor: SCHAAKE, Richard, NL-3551 BA Utrecht (NL); SCHRAMM, Edo, NL-2566 JS Den Haag (NL); VISSERS, Cornelius, Petrus, Antonius, NL-5275 BT Den Dungen (NL); GOMEZ, Marc, S-43351 Öjersjö (SE); PETERS, Gilbert, 6511 DX Nijmegen (NL)
(74) Representative: Schonecke, Mitja
(86) International application number: PCT/EP2014/061882
(87) International publication number: WO 2014/195481

(56) References cited:
- EP-A1- 1 070 604
- DE-A1-102007 053 120
- GB-A- 2 473 007
- US-A1- 2011 056 785

## Description

### FIELD OF THE INVENTION

The present invention relates to a steering knuckle that is at least partly made from a fibre-reinforced composite material.

### BACKGROUND TO THE INVENTION

In the interests of fuel economy, there is an increasing drive within the automotive industry towards weight reduction of the component parts of vehicles. One such component is the steering knuckle, which connects the wheel bearing to the vehicle suspension. Typically, steering knuckles are made of cast iron and consequently, there is potential for weight savings by manufacturing the knuckle from a lightweight material such as fibre-reinforced polymer.

An example of such a steering knuckle is disclosed in DE102007053120 A1. The steering knuckle is formed from a laminar textile comprising fibres bound in a matrix.

There is still room for improvement.

### SUMMARY OF THE INVENTION

The present invention resides in a steering knuckle as specified in claim 1, whereby the dependent claims describe advantageous embodiments and further developments of the invention.

The steering knuckle comprises a bearing connection interface for connecting a wheel bearing to the steering knuckle and comprises further connection interfaces for connecting the steering knuckle to an upper and a lower control arm of a vehicle suspension. The bearing connection interface is formed by a sleeve element, whereby a bore of the sleeve element is adapted to receive an outer ring of the wheel bearing or is adapted to serve as the outer ring. Each further connection interface is formed by a bracket for connection of a ball joint. The sleeve element and the bracket are joined via a composite body comprising a fibre-reinforced material. According to the invention, the fibre-reinforced material comprises a long-fibre moulding compound that is overmoulded to a first joining surface on the sleeve element and to a second joining surface on the bracket, whereby the first joining surface is a radially outer surface of the sleeve element. In addition, the first joining surface is provided with a recessed portion into which the long-fibre moulding compound flows, for mechanically locking the sleeve element to the composite body in an axial direction.

The use of a long-fibre moulding compound enables the geometry of the composite body of the knuckle to be accurately formed in a straightforward manufacturing process. Further, long-fibre moulding compounds have excellent mechanical properties, which provide the steering knuckle with the necessary strength and stiffness to withstand the application forces.

The long fibre moulding compound comprises fibres with a length of 5 - 50 mm, embedded in a polymer matrix. Suitable materials for the fibres include glass, carbon, aramid, PBO (polybenzoxazole) and HDPE (high-density polyethylene). Suitable matrix materials include epoxy resin, phenolic resin, bismaleimide resin, polyimide resin, and thermoplastic polymer material.

In use, a variety of forces act on the knuckle. The largest forces are the wheel forces, which are transferred to the knuckle through the wheel bearing. It is therefore important that the bearing connection interface, formed by the sleeve element, is robustly joined to the composite body of the knuckle. The recessed portion in the joining surface of the sleeve element helps to ensure a robust connection.

Preferably the recessed portion is a continuous annular groove, to maximize the volume of the composite body that is recessed relative to a maximum outer diameter of the sleeve element. Advantageously, the annular groove has a first curved portion and a second curved portion at first and second axial peripheries of the annular groove. The curved portions have a smooth curvature, which prevents the occurrence of stress concentrations.

In a first embodiment the sleeve element is made of e.g. steel and has a bore for receiving the outer ring of the wheel bearing. In a second embodiment, the sleeve element serves as the bearing outer ring. Preferably, the sleeve element is then made of a bearing grade steel, whereby at least a radially inner surface of the sleeve element has a hardened portion for forming a raceway for at least one row of rolling elements. A sleeve element that serves as the bearing outer ring may also be made from a suitable ceramic material or from titanium.

In one example of the second embodiment, the wheel bearing is a double-row angular contact ball bearing and the radially inner surface of the outer ring has first and second angular raceways for first and second rows of balls. Advantageously, the outer ring may be a sleeve element with a constant thickness, which is deformed in a rolling operation. The rolling of the sleeve element, to create the first and second angular raceways at the radially inner side, then automatically generates the continuous annular groove in the joining surface with first and second curved portions.

The forces acting on the knuckle are transmitted to the vehicle suspension mainly via the connection interfaces for the upper and lower control arms. It is therefore important that each bracket is robustly joined to the composite body.

According to a further feature of the invention, each bracket comprises a plurality of stub portions with a centre axis that is radially displaced relative to the first joining surface of the sleeve element. The second joining surface is formed by a radially outer surface of each stub portion. In one example, each bracket has three stub portions. Thus, the second joining surface has a large surface area, which facilitates the connection with the overmoulded composite body.

Preferably, the plurality of stub portions are arranged circumferentially at even intervals around a vertical axis. This distributes the load on the further connection interface and avoids stress concentrations that could damage the composite body. The stub portions may be formed by individual inserts that are held in the mould at appropriate locations. In this case, each stub portion suitably has a threaded hole to enable the connection of the ball joint. Furthermore, to mechanically lock each individual insert to the composite body, the radially outer surface (second joining surface) of each stub portion is provided with a recess such as a continuous groove, as described above.

Preferably, each bracket is a single piece in which the plurality of stub portions are joined together by a connection part with radially extending surfaces. This makes it easier to position the bracket in the mould and provides for mechanical locking of the bracket to the composite body. The single-piece bracket may further comprises a tubular element for receiving a stem of the ball joint, whereby the tubular element has a centre axis that coincides with the vertical axis.

In a further development of the invention, the first joining surface and/or the second joining surface are subjected to a roughening process, prior to overmoulding. The roughening process may include knurling or lettering and creates a surface texture that increases the surface area of the joining surface. Furthermore, fibres of the long-fibre moulding compound will enter into indentations in the surface texture, to improve the strength and stiffness of the interface between the composite body and the joining surface.

Other advantages of the present invention will become apparent from the detailed description and accompanying drawings.

### DRAWINGS

The invention will now be described further, with reference to the following Figures, in which:

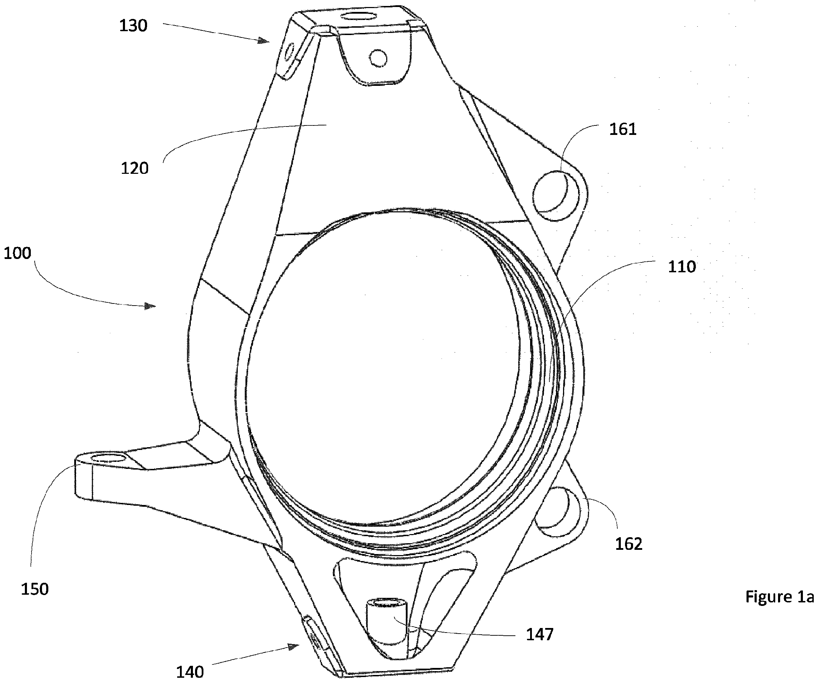

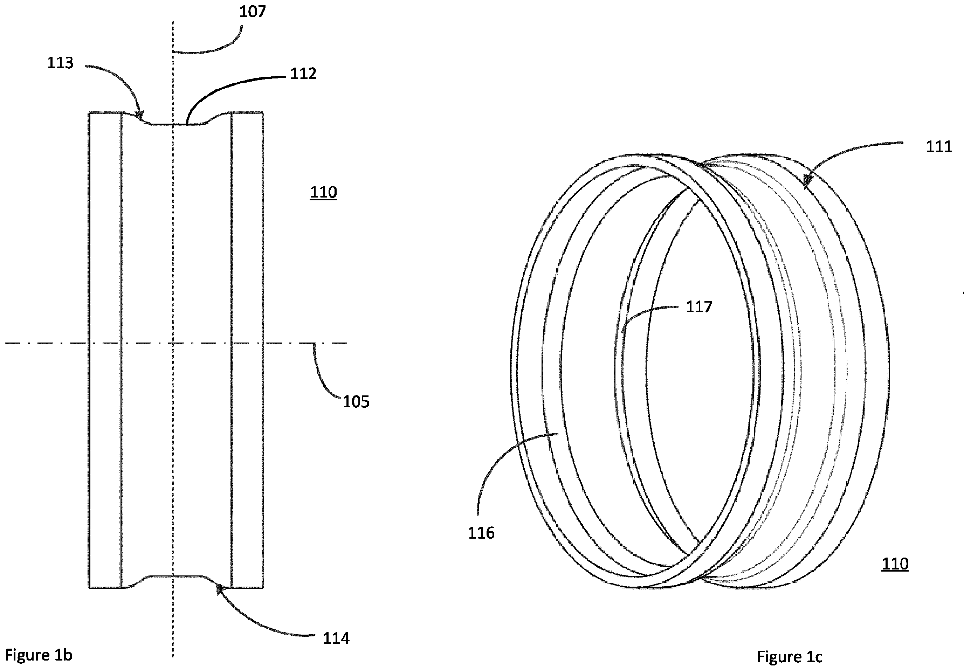

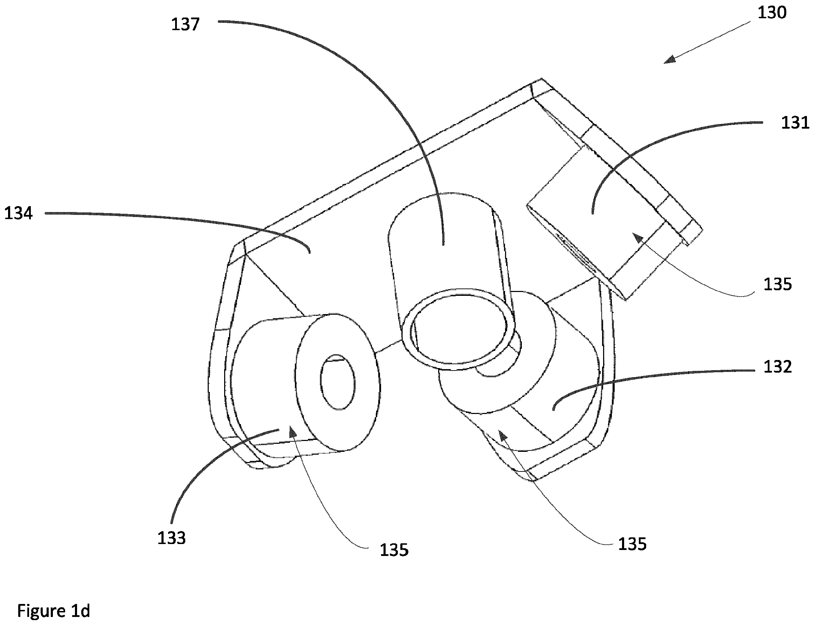

- Fig. 1: shows a perspective view of an example of a steering knuckle according to the invention comprising a composite body moulded to a bearing outer ring and upper and lower brackets;
- Fig. 1b, 1c: respectively show a side view and a perspective view of the bearing ring;
- Fig. 1d: shows a perspective view of the upper bracket.

### DETAILED DESCRIPTION

An example of a steering knuckle according to the invention is shown in Fig. 1a. The knuckle 100 comprises a bore for receiving a wheel bearing unit. The bore is formed in a sleeve element 110, which serves as the bearing outer ring and is made of a bearing-grade steel. The outer ring 110 will form part of a double-row angular contact bearing, and has first and second angular raceways 116, 117 (refer Fig. 1c). The knuckle further comprises a composite body 120 that is made of a long fibre moulding compound comprising e.g. carbon fibres in an epoxy resin matrix. In addition to the bore for connection of the wheel bearing, the knuckle 100 comprises a number of further connection interfaces. In use, the knuckle is mounted to a vehicle suspension via an upper control arm, a lower control arm and a steering arm. The upper and lower control arms are connected via a ball joint, and the knuckle 100 comprises a corresponding upper bracket 130 and a lower bracket 140, which in the depicted example comprise a tubular portion 147 for receiving a stem of the ball joint. The steering arm is connected to the knuckle 100 at an intermediate connection interface 150. At an opposite side from the connection interface 150, the knuckle further comprises first and second connection interfaces 161, 162 for attaching a brake calliper device to the knuckle.

In use, a variety of forces act on the knuckle. The largest forces are the wheel forces, which are transferred to the knuckle through the bearing unit. These forces are transferred to the vehicle suspension mainly through the upper and lower connection interfaces 130, 140, via the composite knuckle body 120, which is formed by moulding the long-fibre moulding compound to the bearing outer ring and to the brackets. It is therefore important that the bearing ring 110 and the upper and lower brackets 130, 140 are securely embedded within the composite body.

The outer ring is shown in more detail in Figures 1b and 1c. The outer ring 110 has an axial centreline 105 and has a radially outer surface 111 to which the composite knuckle body 120 is overmoulded. This radially outer surface will be referred to as a first joining surface 111 and comprises a recessed portion in the form of an annular groove 112. The overmoulded long-fibre moulding compound will flow into the groove, to mechanically lock the bearing ring 110 to the composite body in an axial direction. To further improve the strength and stiffness of the interface between the outer ring 110 and the composite body 120, the first joining surface 111 is roughened to create a surface texture. The surface may be knurled or lettered. This increases the surface area of the joining surface 111 and creates indentations into which the fibres of the moulding compound can enter.

In the depicted example, the outer ring 110 is formed from a cylinder having a constant thickness which is deformed in order to create the annular groove 112. At first and second axial sides of an axial midplane 107 through the bearing ring 110, the annular groove has a first curved portion 113 and a second curved portion 114. Suitably the first and second portions have a smooth curvature in order to avoid stress concentrations.

Advantageously, the curvature is selected such that the radially inner side of the outer ring 110 has correspondingly curved first and second surfaces which form the first 116 and second 117 angular raceways for first and second rows of balls.

As mentioned, a robust join between the composite body and the upper and lower brackets is also important for ensuring that the knuckle is able to withstand the application forces. A perspective view of the upper bracket 130 is shown in Figure 1d. The bracket comprises a tubular part 137 for receiving the stem of a ball joint. The part 137 may be threaded, may have a tapered bore, or may have a straight bore such that the ball joint stem can be bolted to the bracket 130. A centre axis of the tubular part 137 is perpendicular to or translationally perpendicular to the centre axis 105 of the bearing. To ensure that the bracket 130 is securely embedded within the composite body 120, the bracket has three stub portions 131, 132, 133, which are arranged circumferentially around the tubular part 137 at regular intervals. As a result, reaction forces on the composite body 120 from the upper control arm, which are transmitted via the upper bracket 130, are evenly distributed.

Each stub portion has a centre axis, which is radially displaced from the first joining surface 111. The composite body 120 is moulded to a radially outer surface 135 of each stub portion, which together form a second joining surface of the bracket 130. The second joining surface therefore has a large surface area and radially locks the bracket 130 to the composite body 120. Axial locking is provided in that the stub portions 131, 132, 133 are joined to the tubular part 137 by a connection element 134 of the bracket. In the depicted example, the bracket 130 is a single piece, which facilitates the positioning of the bracket during the overmoulding of the composite body.

The second joining surface 135 is also roughened to improve the strength and stiffness of the interface between the bracket and the composite body.

A steering knuckle according to the invention is thus a lightweight and robust component.

## Claims

1. Steering knuckle (100) comprising a bearing connection interface for connecting a wheel bearing to the steering knuckle and comprising a further connection interface for connecting the steering knuckle to an upper or a lower control arm of a vehicle suspension, wherein:
▪ the bearing connection interface is formed by a sleeve element (110), whereby a bore of the sleeve element is adapted to receive an outer ring of the wheel bearing or is adapted to serve as the outer ring;
▪ the further connection interface is formed by a bracket (130, 140) for connection of a ball joint; and
▪ the sleeve element (110) and the bracket (130, 140) are joined via a composite body (120) comprising a fibre-reinforced material,
**characterized in that**
• the fibre-reinforced material comprises a long-fibre moulding compound that is overmoulded to a first joining surface (111) on the sleeve element and to a second joining surface (135) on the bracket, whereby the first joining surface is a radially outer surface of the sleeve element;
• the first joining surface (111) is provided with a recessed portion (112) into which the long-fibre moulding compound flows, for mechanically locking the sleeve element to the composite body (120) in an axial direction; and
• the bracket (130, 140) comprises a plurality of stub portions (131, 132, 133) with a centre axis that is radially displaced relative to the first joining surface (111) and wherein the second joining surface is formed by a radially outer surface (135) of each stub portion.

2. Steering knuckle according to claim 1, wherein the recessed portion (112) is a continuous annular groove.

3. Steering knuckle according to claim 2, wherein the annular groove (112) has a first curved portion (113) and a second curved portion (114) at first and second axial peripheries of the annular groove.

4. Steering knuckle according to claim 3, wherein:
• the wheel bearing is a double-row angular contact bearing;
• the sleeve element serves as the bearing outer ring and has an essentially constant thickness, such that a radially inner surface of the outer ring (110) has corresponding first and second curved portions which form part of first and second outer raceways (116, 117) for first and second rows of rolling elements.

5. Steering knuckle according to any preceding claim, wherein the radially outer surface of each stub portion (131, 132, 133) is provided with a recess.

6. Steering knuckle according to any preceding claim, wherein the plurality of stub portions (131. 132, 133) are arranged circumferentially around a vertical axis that is parallel to an axial midplane (107) of the sleeve element (110).

7. Steering knuckle according to any of claims 1 to 6, wherein the bracket (130, 140) comprises a tubular element (137, 147) for receiving a stem of the ball joint, whereby the stub portions (131, 132, 133) are arranged circumferentially around the tubular element.

8. Steering knuckle according to claim 5 or 6, wherein each of the plurality of stub portions (131, 132, 133) has an internal thread.

9. Steering knuckle according to any preceding claim, wherein the first (111) and/or second (135) joining surface is roughened in order to create a surface texture.

## Patentansprüche

1. Radträger (100), der eine Lagerverbindungsschnittstelle für das Verbinden eines Radlagers mit dem Radträger umfasst und eine weitere Verbindungsschnittstelle zum Verbinden des Radträgers mit einem oberen oder unteren Querlenker einer Fahrzeug-Radaufhängung umfasst, wobei:
▪ die Lagerverbindungsschnittstelle durch ein Hülsenelement (110) ausgebildet ist, wobei eine Bohrung des Hülsenelements dazu ausgelegt ist, einen äußeren Ring des Radlagers aufzunehmen, oder dazu ausgelegt ist, als der äußere Ring zu dienen;
▪ die weitere Verbindungsschnittstelle gebildet wird durch einen Halter (130, 140) zum Verbinden eines Kugelgelenks; und
▪ das Hülsenelement (110) und der Halter (130, 140) über ein Verbundgehäuse (120) verbunden sind, das ein faserverstärktes Material umfasst,
**dadurch gekennzeichnet, dass**
• das faserverstärkte Material eine Langfaser-Formungsmischung umfasst, mit der eine erste Verbindungsoberfläche (111) auf dem Hülsenelement und eine zweite Verbindungsoberfläche (135) auf dem Halter umspritzt wird, wobei die erste Verbindungsoberfläche eine radial äußere Oberfläche des Hülsenelements ist;
• die erste Verbindungsoberfläche (111) mit einem vertieften Abschnitt (112) versehen ist, in den die Langfaser-Formungsmischung strömt, um das Hülsenelement in einer axialen Richtung mit dem Verbundgehäuse (120) mechanisch zu verriegeln; und
• der Halter (130, 140) eine Vielzahl von Stumpfabschnitten (131, 132, 133) mit einer mittleren Achse umfasst, die relativ zu der ersten Verbindungsoberfläche (111) radial versetzt ist, und wobei die zweite Verbindungsoberfläche durch eine radial äußere Oberfläche (135) eines jeden Stumpfabschnittes ausgebildet wird.

2. Radträger nach Anspruch 1, wobei der vertiefte Abschnitt (112) eine durchgängige ringförmige Nut ist.

3. Radträger nach Anspruch 2, wobei die ringförmige Nut (112) einen ersten gewölbten Abschnitt (113) und einen zweiten gewölbten Abschnitt (114) an einer ersten und zweiten axialen Peripherie der ringförmigen Nut aufweist.

4. Radträger nach Anspruch 3, wobei:
• das Radlager ein zweireihiges Schrägkontaktlager ist;
• das Hülsenelement als der Lageraußenring dient und eine im Wesentlichen konstante Dicke aufweist, sodass eine radial innere Oberfläche des Außenrings (110) entsprechende erste und zweite gewölbte Abschnitte aufweist, die einen Teil von ersten und zweiten äußeren Laufbahnen (116, 117) für erste und zweite Reihen von rollenden Elementen bilden.

5. Radträger nach einem der vorangehenden Ansprüche, wobei die radial äußere Oberfläche eines jeden Stumpfabschnittes (131, 132, 133) mit einer Vertiefung versehen ist.

6. Radträger nach einem der vorangehenden Ansprüche, wobei die Vielzahl von Stumpfabschnitten (131, 132, 133) zirkumferenziell um eine vertikale Achse angeordnet ist, die parallel zu einer axialen Mittelebene (107) des Hülsenelements (110) verläuft.

7. Radträger nach einem der Ansprüche 1 bis 6, wobei der Halter (130, 140) ein röhrenförmiges Element (137, 147) zum Aufnehmen eines Stamms des Kugelgelenks umfasst, wobei die Stumpfabschnitte (131, 132, 133) zirkumferenziell rings um das röhrenförmige Element angeordnet sind.

8. Radträger nach Anspruch 5 oder 6, wobei jeder von der Vielzahl von Stumpfabschnitten (131, 132, 133) ein Innengewinde aufweist.

9. Radträger nach einem der vorangehenden Ansprüche, wobei die erste (111) und/oder zweite (135) Verbindungsoberfläche aufgeraut ist, um eine Oberflächentextur zu schaffen.

## Revendications

1. Support de roue (100) comprenant une interface de liaison de roulement pour relier un roulement de roue au support de roue et comprenant une autre interface de liaison pour relier le support de roue à un bras de commande supérieur ou inférieur d'une suspension de véhicule,
l'interface de liaison de roulement étant formée par un élément manchon (110), moyennant quoi un alésage de l'élément manchon est conçu pour recevoir une bague extérieure du roulement de roue ou est conçu pour servir de bague extérieure ;
l'interface de liaison étant en outre formée par un support (130, 140) pour la liaison d'un joint à rotule ; et
l'élément manchon (110) et le support (130, 140) étant liés par l'intermédiaire d'un corps composite (120) comprenant un matériau renforcé de fibres,
**caractérisé en ce que**
le matériau renforcé de fibres comprend un composé de moulage à fibres longues qui est surmoulé sur une première surface de jonction (111) sur l'élément manchon et sur une seconde surface de jonction (135) sur le support, la première surface de jonction étant une surface radialement extérieure de l'élément manchon ;
la première surface de jonction (111) comprend une partie évidée (112) dans laquelle s'écoule le composé de moulage à fibres longues, pour verrouiller mécaniquement l'élément manchon sur le corps composite (120) dans une direction axiale ; et
le support (130, 140) comprend une pluralité de talons (131, 132, 133) avec un axe central qui est déplacé radialement par rapport à la première surface de jonction (111) et la seconde surface de jonction étant formée par une surface radialement extérieure (135) de chaque talon.

2. Support de roue selon la revendication 1, la partie évidée (112) étant une rainure annulaire continue.

3. Support de roue selon la revendication 2, la rainure annulaire (112) ayant une première partie incurvée (113) et une seconde partie incurvée (114) sur les première et seconde périphéries axiales de la rainure annulaire.

4. Support de roue selon la revendication 3,
le roulement de roue étant un roulement à contact oblique à double rangée ;
l'élément manchon servant de bague extérieure de roulement et ayant une épaisseur essentiellement constante, de sorte qu'une surface radialement intérieure de la bague extérieure (110) ait des première et seconde parties incurvées correspondantes qui font partie des première et seconde pistes de roulement extérieures (116, 117) pour des première et seconde rangées d'éléments roulants.

5. Support de roue selon l'une quelconque des revendications précédentes, la surface radialement extérieure de chaque talon (131, 132, 133) comprenant un évidement.

6. Support de roue selon l'une quelconque des revendications précédentes, la pluralité de talons (131, 132, 133) étant disposés circonférentiellement autour d'un axe vertical qui est parallèle à un plan médian axial (107) de l'élément manchon (110).

7. Support de roue selon l'une quelconque des revendications 1 à 6, le support (130, 140) comprenant un élément tubulaire (137, 147) pour recevoir une tige du joint à rotule, les talons (131, 132, 133) étant disposés autour de l'élément tubulaire.

8. Support de roue selon la revendication 5 ou 6, chacun de la pluralité de talons (131, 132, 133) ayant un filet interne.

9. Support de roue selon l'une quelconque des revendications précédentes, la première (111) et/ou la seconde (135) surfaces de jonction étant rendues rugueuses pour créer une texture de surface.
